Europäisches Patentamt

European Patent Office

Office européen des brevets

(19)

(11) Veröffentlichungsnummer: **0 167 017**
**B2**

(12) **NEUE EUROPÄISCHE PATENTSCHRIFT**

(45) Veröffentlichungstag der neuen Patentschrift:
**08.08.90**

(21) Anmeldenummer: **85107079.7**

(22) Anmeldetag: **07.06.85**

(51) Int. Cl.⁵: **C 09 K 3/00,** B 05 D 1/02

(54) **Einkomponentenformulierung zur Ausfällung, Entklebung und Koalgulierung von Unterbodenschutz auf Basis von Wachsen, wachsähnlichen Kunststoffen und Kunststoffdispersionen sowie von Kunstharzlacken in Nassabscheidern von Spritzlackieranlagen unter Erzielung eines sedimentierenden Lackschlamms und deren Verwendung.**

(30) Priorität: **07.06.84 DE 3421270**

(43) Veröffentlichungstag der Anmeldung:
**08.01.86 Patentblatt 86/02**

(45) Bekanntmachung des Hinweises auf die Patenterteilung:
**23.09.87 Patenblatt 87/39**

(45) Bekanntmachung des Hinweises auf die Entscheidung über den Einspruch:
**08.08.90 Patentblatt 90/32**

(84) Benannte Vertragsstaaten:
**AT BE CH DE FR GB IT LI LU NL SE**

(56) Entgegenhaltungen:
**EP-A-0 104 904**
**EP-A-0 158 896**
**FR-A-1 035 780**
**FR-A-1 489 064**

**CHEMICAL ABSTRACTS, Band 91, 1979, Seite 317, Nr. 62196f, Columbus, Ohio, US; & JP - A - 79 24 271 (NIPPON OILS AND FATS CO., LTD.) 23.02.1979**

(73) Patentinhaber: **Zeller + Gmelin GmbH & Co**
**Schlossstrasse 20**
**D-7332 Eislingen / Fils (DE)**

(72) Erfinder: **Seng, Hans-Peter, Dr.**
**Spitzenbergweg 1**
**D-7334 Süssen (DE)**

(74) Vertreter: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

EP 0 167 017 B2

Courier Press, Leamington Spa, England.

**Beschreibung**

In Spritzlackieranlagen wird Lack unter Druck durch Düsen fein verteilt auf zu lackierende Gegenstände, beispielsweise Autos, gesprüht. Dies geschieht in sogenannten Spritzkabinen, Spritzständen oder an Spritzwänden. Der hierbei entstehende Farbnebel muß aus der Luft wieder entfernt werden. Hierzu wird die mit Farbnebeln verunreinigte Luft mittels Ventilatoren durch Farbnebel-Naßabscheider gesaugt, in denen Wasser im Gegenstrom geführt und durch Einbauten und dergleichen in innigen Kontakt mit der farbnebel enthaltenden Luft gebracht wird. Ein derartiger Farbnebel Naßabscheider ist aus der DE—AS 12 69 594 bekannt.

Zum Ausfällen und Koagulieren der in dem ständig in dem Naßabscheider umgewälzten Wasser abgeschiedenen Lackpartikel werden dem Wasser üblicherweise alkalisch reagierende Mittel, sogenannte Lackentklebungs- oder -koagulierungsmittel beigegeben. Hierdurch wird die Neigung der Lackpartikel, an den Wänden des Naßabscheiders und sonstigen Bauelementen sich abzulagern, verringert, wodurch Funktionsstörungen und ein erheblicher Wartungs- und Reinigungsaufwand vermieden werden. Auch der Abtransport und die endgültige Lagerung des Lackschlamms wird erleichtert, wenn er aus einem nicht klebenden Lackkoagulat besteht.

Eine Arbeitsweise dieser Art wird in der DE—OS 27 58 873 beschrieben, die ein Verfahren zum Ausfällen von Kunstharzlacken in Farbnebel-Naßabscheidern von Spritzlackieranlagen unter Verwendung von alkalisch eingestelltem Wasser mit einem Lackpartikel einhüllenden Zuschlagsstoff betrifft, das dadurch gekennzeichnet ist, daß als Zuschlagsstoff eine wäßrige Wachsdispersion eingesetzt wird. Hierbei soll das Wasser auf einen pH-Wert von 8.0 bis 13.5 eingestellt werden, wozu konzentrierte wäßrige Natronlauge eingesetzt wird. Die als Zuschlagsstoff eingesetzte Wachsdispersion enthält vorteilhaft ein Gemisch aus Montanwachs und Paraffinabklömmlingen. Es handelt sich hierbei um eine Zweikomponentenformulierung, da außer der Wechdispersion getrennt Alkali zugegeben wird.

Weiterhin ist es, wie die Praxis gezeigt hat, bei diesem Verfahren erforderlich, in Gegenwart von Tensiden zu arbeiten, wenngleich die Verwendung von Tensiden dort lediglich als vorteilhaft bezeichnet wird. Weitere herkömmliche Koaguliermittel arbeiten auf der Basis von:

1. Natronlauge und Mineralöl
2. nur Natronlauge
3. sauren, neutralen oder alkalischen Flockungsmitteln auf Basis von Aluminium- und Eisensalzen unter Zusatz von polymeren Acrylaten als Hilfsflocker
4. Mischungen aus Natriumhydroxid, Silikaten und Phosphaten in Pulverform
5. Calciumchlorid-Lösungen
6. Wachsdispersionen und Natronlauge.

Diese Koaguliermittel sind alle mehr oder weniger in der Lage, Lacke auf Basis Nitro, Polyacrylat, Polyester, Polyurethan und Wachsunterbodenschutz herkömmlicher Art in Form von sedimentierendem Koagulat zu koagulieren. Alle bischerigen bekannten, herkömmlichen Koaguliermittel, einschließlich derjenigen auf Wachsbasis sind jedoch nicht in der Lage, Unterbodenschutz- und Steinschlagschutztypen, die auf neuartigen Kombinationen natürlicher Wachse oder wachsartiger Wirkstoffe aufgebaut sind, sedimentierend zu entkleben und zu koagulieren.

Ziel der Erfindung war es daher, eine Einkomponentenformulierung zu schaffen, die zur Ausfällung, Entklebung und Koagulierung von Unterbodenschutz auf Basis von Wachsen, wachsähnlichen Kunststoffen und Kunststoffdispersionen sowie von Kunstharzlacken in Farbnebelnaßscheidern von Spritzlackieranlagen unter Erzielung eines sedimentierenden Lackschlamms geeignet ist und die weitgehend ohne weitere Zusätze für die Koagulierflotte, insbesondere ohne Zusatz eines Entschäumers auskommt.

Diese Ziele werden durch den Einsatz eine wäßrigen Marmorkalkhydratsuspension als Zuschlagsstoff in einer näher definierten Einkomponentenformulierung erreicht.

Gegenstand der Erfindung ist eine einen lackpartikeleinhüllenden Zuschlagsstoff enthaltende Einkomponentenformulierung zur Ausfällung, Entklebung und Koagulierung von Unterbodenschutz auf Basis von Wachsen, wachsähnlichen Kunststoffen und Kunststoffdispersionen sowie von Kunstharzlacken in Farbnebelnaßabschneidern von Spritzlackieranlagen unter Erzielung eines sedimentierenden Lackschlamms, dadurch gekennzeichnet, daß sie als Zuschlagsstoff eine wäßrige Suspension von Marmoralkydrat enthält und gekennzeichnet ist durch einen Gehalt an

a) 0,1 bis 0,5 % einer Zellulose und Montmorillonit oder Smektit enthaltenden Mischung,
b) 1 bis 2 % aliphatischem Alkohol mit 1 bis 3 Kohlenstoffatomen,
c) 1 bis 10 % Fettalkoholalkoxylat,
d) 0,1 bis 0,8 % Naphthalinsulfosäure- Kondensationsprodukt,
e) 30 bis 50 % Marmorkalkhydrat,

jeweils bezogen auf das Gewicht der Formulierung, wobei der Rest der Formulierung durch Wasser gebildet wird.

Ist der Unterbodenschutz auf Basis von Kunststoffdispersionen formuliert, kann es sich z.B. um PVC handeln.

Die erfindungsgemäße Formulierung enthält somit in der Marmorkalkhydratsuspension ein Gemisch einer Zellulose und Montmorillonit oder Smektit enthaltenden Mischung und aus Natriumsalzen von Naphthalinsulfosäure-Kondensationsprodukten. Dieses Gemisch erlaubt die Herstellung einer stabilen, pump- und rührfähigen, hochprozentigen Marmorkalkhydratsuspension. Bei der Mischung aus Zellulose und Montmorillonit oder Smektit handelt es sich um eine Kombination eines quellbaren organischen Materials mit einem quellbaren anorganischen Material. Vorzugsweise besteht diese Mischung aus 50—70 Gew.-% Zellulose und 30—50 Gew.-% Montmorillonit oder Smektit.

Der Marmorkalkhydratsuspension sind schaumarme alkaliresistente oberflächenaktive Netzmittel auf Basis von Fettalkoholalkoxylat zugesetzt.

Eine spezielle Einkomponentenformulierung der erfindungsgemäß definierten Art ist gekennzeichnet durch einen Gehalt an

a) 0.4—0.5 % einer Zellulose und Montmorillonit oder Smektit enthaltenden Mischung
b) 1,5 % aliphatischen Alkohol mit 1—3 Kohlenstoffatomen
c) 4—6 % Fettalkoholalkoxylat
d) 0,4—0,6 % Naphthalinsulfosäure-Kondensationsprodukt und
e) 38—41 % Marmorkalkhydrat

jeweils bezogen auf das Gewicht der Formulierung, wobei der Rest der Formulierung durch Wasser gebildet wird.

Eine bevorzugte erfindungsgemäße Einkomponentenformulierung besitzt folgende Zusammensetzung:

| | |
|---|---|
| Wasser | 52,5 Gew.-% |
| Mischung aus 50—70 Gew.-% Zellulose und 30—50 Gew.-% Montmorillonit oder Smektit | 0,5 Gew.-% |
| Propanol-2 | 1,5 Gew.-% |
| Fettalkoholalkoxylat als alkalibeständiges schaumarmes Tenside | 5.0 Gew.-% |
| Natriumsalz eines Naphthalinsulfosäure-Kondensationsproduktes | 0,5 Gew.-% |
| Marmorweißalkhydrat | 40,0 Gew.-% |

Diese spezielle Einkomponentenformulierung besitzt folgende Kenndaten:

| | |
|---|---|
| Viskosität/20°C: | ca. 300 sec. Auslaufzeit im Ford-Becher 4 mm |
| Farbe | milchig weiß |
| Dichte/20°C | 1,29 g/ml |
| pH-Wert in Anwendungskonzentration | 12,2 |

Bei der Komponente a) der erfindungsgemäßen Formulierung handelt es sich um ein organisch modifiziertes Magnesium-Schichtsilicat. Der pH-Wert einer wäßrigen 2 %igen Suspension der Komponente a) beträgt 8,8 bis 10,2.

Als aliphatische Alkohole mit 1 bis 3 Kohlenstoffatomen der Komponente b) kommen insbesondere Äthanol und Propanol-2 sowie auch Methanol in Frage, wenngleich das letztgenannte wegen seiner Giftigkeit weniger bevorzugt ist. Bevorzugt wird Propanol-2 eingesetzt.

Bei der Komponente c) handelt es sich um ein Fettalkoholalkoxylat, das erhalten wird durch Umsetzung eines (C$_8$—C$_{12}$)-Fettalkohols mit Äthylenoxid und Propylenoxid. Ein bevorzugtes, derartiges Fettalkoholalkoxylat besitzt die folgenden Kenndaten:

| | |
|---|---|
| Trübungspunkt (DIN 53 917,5 g + 25 g 25 %ige BDG-Lösung) | ca. 41°C |
| pH-Wert (5 %ig in Wasser) | ca. 7 |
| Dichte (20°C) | ca. 0,94 g/cm |
| Stockpunkt | ca.-20°C |
| Oberflächenspannung (DIN 53 914, 1 g/l, 20°C) | ca. 33 mN/m |

Die Komponente d) stellt ein Naphthalinsulfosäure-Kondensationsprodukt dat, das vorzugsweise folgende Kenndaten aufweist:

| | |
|---|---|
| Gehalt Natriumsulfat | 5—7 % |
| pH-Wert (10 %ig in Wasser) | 6,5—7,5 |

Es handelt sich also in diesem speziellen Fall um ein vollständig in das Salz uberführtes Produkt.

Was die Komponente e) (Marmorkalkhydrat) anbelangt, so wurde diese bereits als Zusatzmittel in der Abwasserreinigung, vorwiegend in kommunalen Kläranlagen in Form der sogenannten Kalkmilch eingesetzt. Es handelt sich hiebei um hochverdünnte wäßrige Calciumhydroxidsuspensionen. Im Gegensatz hierzu zeichnet sich die erfindungsgemäße Formulierung dadurch aus, daß durch die Verwendung einer Zellulose und Montmorillonit oder Smektit enthaltenden Mischung zusammen mit den Naphthalinsulfosäure-Kondensationsprodukten eine hochprozentige, noch fließ- und pumpfähige Suspension von Marmorkalkhydrat in Wasser vorliegt, die als solche ohne Umrühren stabil bleibt.

3

Das vorliegend als eigentlicher Wirkstoff eingesetzte Marmorweißkalkhydrat oder Weißalkhydrat besitzt folgende chemische Zusammensetzung:

| | |
|---|---|
| Glühverlust | 24,79 % |
| davon Hydratwasser | 22,7 % |
| Kohlendioxid | 1,71 % |
| Kieselsäure | 0,75 % |
| Eisenoxid der chemischen Formel $Fe_2O_3$ | 0,15 % |
| Aluminiumoxid der chemischen Formel $Al_2O_3$ | 0,41 % |
| Calciumoxid | 72,88 % |
| Magnesiumoxid | 0,41 % |
| Sulfatschwefel der chemischen Formel SO | 0,19 % |
| Rest n.b. | 0,44 % |
| Summe | 100.00 % |

Die in der erfindungsgemäßen Formulierung enthaltenen Komponenten besitzen folgende Wirkungsweisen.

Die Naphthalinsulfosäure-Kondensationsprodukte wirken als Stabilisiermittel und Dispergierhilfsmittel mit Schutzkolloidwirkung. Die Verwendung dieser Produkte ermöglicht die Herstellung hochkonzentrierter, aber fließ- und pumpfähiger Marmorweißkalkhydratsuspension.

Die Mischung aus Zellulose, Montmorillonit oder Smektit sorgt durch Gerüstbildung dafür, daß die Marmorweißkalkhydratteilchen in Schwebe gehalten werden; Sedimentationserscheinungen werden somit verhinder.

Würden beide Komponenten jeweils nur einzeln verwendet, wird entweder die Viskosität der Suspension zu hoch oder das Marmorkalkhydrat sedimentiert sehr schnell. Erst durch den Einsatz beider Komponenten wird eine stabile, aber noch pumpfähige Suspension erzielt.

Für die Koagulierwirkung sind das Marmorkalkhydrat und das Fettalkoholalkoxylat veräntwortlich. Die anderen Komponenten dienen lediglich der Einstellung der Suspension.

Im einzelnen besitzt das Marmorkalkhydrat folgende Wirkungsweisen:

1. Es entklebt den mit herkömmlichen Koaguliermitteln nicht zu entklebenden Unterbodenschutz auf Basis natürlicher Wachse.

2. Es wandelt den Unterbodenschutz in ein in Wasser absinkendes Koagulat um, das mittels eines Bodenräumers kontinuierlich ausgetragen werden kann. Die Funktion der Lackieranlage und die Entsorgung des Overspraymaterials sind somit gewährleistet.

3. Es vereint 3 Eigenschaften in einer Komponente, nämlich diejenigen

3.1 eines alkalischen Entklebemittels

3.2 eines Adsorptionsmittels für Lacke

3.3 eines Flockungsmittels für Lack-Kalk-Agglomerate.

Das Marmorkalkhydrat wird nicht als festes Pulver, sondern in Form einer stabilen, pumpfähigen, hochprozentigen Suspension ohne entsprechende Vorbehandlung direkt in die Lackieranlage zudosiert. Demgenenüber sind z. Zt. auf dem Markt befindliche bekannte Koaguliermittel in Pulverform in wäßriger Suspension nicht suspensionstabil und verlieren mit zunehmender Standzeit die koagulierende Wirkung, so daß nur jeweils etwa ein Tagesbedarf als Suspension angesetzt werden kann.

Durch den Einsatz eines schaumarmen pH-resistenten Tensides auf Basis eines Fettalkoholalkoxylats wird der Kontakt von hydrophilem Kalkhydrat mit dem hydrophoben Unterbodenschutz schnell und intensiv hergestellt. Hieraus resultiert ein entklebtes Koagulat.

Die Herstellung der erfindungsgemäßen Formulierung kann wie folgt erfolgen:

Das Wasser wird vorgelegt. Man rührt ein Vorprodukt aus dem aliphatischen Alkohol und der Mischung aus Zellulose, Montmorillonit oder Smektit mittels eine Rührwerks (z.B. langsam rotierendes Ankerrührwerk) ein. Anschließend werden Naphthalinsulfosäure-Kondensationsprodukte und das Fettalkoholalkoxylat eingerührt. Zuletzt wird unter langsamem Einrühren Marmorkalkhydrat eingetragen.

Die erfindungsgemäße Formulierung eignet sich als Zusatz in Lackspritzkabinen und Lackspritzständen mit Auswaschsystemen für absinkendes Koagulat. Sie entklebt Lacke und Unterbodentypen vollständig, wodurch ein störungsfreies Arbeiten der Anlagen gewährleistet wird. Der Reinigungsaufwand verringert sich auf eine Minimum und die Standzeit der Koagulierflotte verlängert sich beträchtlich. Die erfindungsgemäße Formulierung ist insbesondere für die Anwendung bei Lacken und Unterbodenschutztypen auf Lösungsmittelbasis geeignet.

Bei ihrer Anwendung kann die erfindungsgemäße Formulierung dem Umlaufwasser bei laufender Pumpe manuell oder mittels einer Dosierpumpe zudosiert werden. Sie wirkt unabhängig vom pH-Wert und von der Wasserhärte des Auswaschbadea.

Die jeweilige Dosierung richtet sich nach der Lacksorte und -menge bzw. nach dem Unterbodenschutztyp und -menge, die entklebt werden soll. Auch die Anlagenart und die Fahrweise spielt dabei eine Rolle. Die optimale Dosierung wird daher jeweils im praktischen Einsatz ermittelt. Dabei kann von folgenden Basiswerten ausgegangen werden:

Grunddosierung: 1—2 % des Wasservolumens an erfindungsgemäßer Formulierung

Bei Neueinsatz der erfindungsgemäßen Formulierung kann ein bereits in Betrieb befindliches Auswaschbad mit dieser ohne Frischwasserzusatz überfahren werden.

Nachdosierung; 1 l erfindungsgemäße Formulierung auf 10—20 kg Overspraymasse

Die erfindungsgemäße Formulierung stellt das bisher einzige Koaguliermittel dar, das den besonderen Unterbodenschutz Tectyl DB 100 entkleben und in sedimentierendes Koagulat umwandeln kann. (Es handelt sich hierbei um einen in größen Umfang verwendeten Unterbodenschütz für Lastkraftwagen). Der hierbei entstehende sedimentierende Lackschlamm kann problemlos über einen Bodenräumer ausgeräumt werden.

Gegenstand der Erfindung ist daher auch die Verwendung der vorliegenden Einkomponentenformulierung zur Ausfällung, Entklebung und Koagulierung von Kunstharzlacken und Unterbodenschutzformulierungen in Naßabscheidern von Spritzlackieranlagen unter Erzielung eines sedimentierenden Lackschlamms.

Das folgende Beispiel erläutert die Erfindung.

## Beispiel 1

Es wird eine Einkomponentenformulierung mit der folgenden Zusammensetzung hergestellt:

| | |
|---|---|
| Wasser | 52,5 Gew.-% |
| Mischung aus 50—70 Gew.-% Zellulose und 30—50 Gew.-% Montmorillonit oder Smektit | 0,5 Gew.-% |
| Propanol-2 | 1,5 Gew.-% |
| Fettalkoholalkoxylat | 5,0 Gew.-% |
| Natriumsalz von Naphthalinsulfosäure-Kondensationsprodukten | 0,5 Gew.-% |
| Marmorweißalkhydrat | 40,0 Gew.-% |

Hierzu werden in das vorgelegte Wasser ein Vorprodukt aus Propanol-2 und der Mischung aus Zellulose und Montmorillonit oder Smektit mittels eines Rührwerks eingerührt. Danach werden die Naphthalinsulfosäure-Kondensationsprodukte und das Fettalkoholalkoxylat eingerührt. Zuletzt wird unter langsamem Einrühren das Marmorkalkhydrat eingetragen.

Die entstandene Paste besitzt eine Auslaufzeit von ca. 300 sec im Ford-Becher mit einer 4 mm Düse. Die Dichte des Produkts beträgt 1,29 und sein pH-Wert ca. 14.

Mit dieser Formulierung werden ein Unterbodenschutz auf Wachsbasis mit ca. 35 % Lösungsmittelanteil (Handelsbezeichnung Tectyl DB 100) sowie ein Hohlraumversiegler auf Wachsbasis koaguliert.

Grunddosierung: 1000 kg Einkomponentenformulierung in 80 m³ Wasser entsprechend 1,25 % bezogen auf das Wasservolumen der Lackieranlage.

Nachdosierung: nach ca. 20 Tagen 120 kg Einkomponentenformulierung

Innerhalb der genannten 20 Tage sind ca. 6000 kg Unterbodenschutz als Overspray angefallen. Es werden also pro 50 kg Overspray 1 kg Einkomponentenformulierung dosiert.

Es spielt sich ein Nachdosierungswert von 1 kg Einkomponentenformulierung pro 20 Overspray ein.

Das entklebte Koagulat mit sedimentierender Tendenz kann mit Hilfe eines Bodenräumers problemlos ausgeräumt werden.

## Patentansprüche

1. Einen lackpartikeleinhüllenden Zuschlagstoff enthaltende Einkomponentenformulierung zur Ausfällung, Entklebung und Koagulierung von Unterbodenschutz aus Basis von Wachsen, wachsähnlichen Kunststoffen und Kunststoffdispersionen sowie von Kunstharzlacken in Farbnebelnaßabscheidern von Spritzlackieranlagen unter Erzielung eines sedimentierenden Lackschlamms, dadurch gekennzeichnet, daß sie als Zuschlagstoff eine wäßrige Suspension von Marmorkalkhydrat enthält und gekennzeichnet ist durch einen Gehalt an

a) 0,1 bis 0,5 % einer Zellulose und Montmorillonit oder Smektit enthaltenden Mischung,

b) 1 bis 2 % aliphatischem Alkohol mit 1 bis 3 Kohlenstoffatomen,

c) 1 bis 10 % Fettalkoholalkoxylat,

d) 0,1 bis 0,8 % Naphthalinsulfosäure-Kondensationsprodukt,

e) 30 bis 50 % Marmorkalkhydrat,

jeweils bezogen auf das Gewicht der Formulierung, wobei der Rest der Formulierung durch Wasser gebildet wird.

2. Verwendung der Einkomponentenformulierung gemäß Anspruch 1 zur Ausfällung, Entklebung und Koagulierung von Unterbodenschutz auf Basis von Wachsen, wachsähnlichen Kunststoffen und Kunststoffdispersionen sowie von Kunstharzlacken in Naßabscheidern von Spritzlackieranlagen unter Erzielung eines sedimentierenden Lackschlamms.

**Revendications**

1. Composition à composant unique contenant un additif qui enrobe les particules de laque pour la précipitation, le décollement et la coagulation des couches inférieures de protection à base de cires, de matières plastiques cireuses et de latex synthétiques ainsi que des laques de résines synthétiques dans les séparateurs à liquide de brouillard de peinture des installations de pulvérisation de peinture par obtention d'une boue de laque qui précipite, caractérisée en ce qu'elle contient comme additif une suspension aqueuse d'hydroxyde de calcium marbrier et caractérisée par une teneur

a) de 0, 1 à 0,5% en un mélange contenant de la cellulose et de la montmorillonite ou de la smectite,
b) de 1 à 2% d'un alcool aliphatique ayant de 1 à 3 atomes de carbone,
c) de 1 à 10% d'un produit d'alcoxylation d'alcool gras,
d) de 0,1 à 0,8% d'un produit de condensation de l'acide naphtalènesulfonique,
e) de 30 à 50% d'hydroxyde de calcium marbrier,

rapportée chaque fois au poids de la composition, le reste de la composition étant constitué par de l'eau.

2. Utilisation de la composition à composant unique selon la revendication 1 pour la précipitation, le décollement et la coagulation des couches inférieures de protection à base de cires, de matières plastiques cireuses et de latex synthétiques dans les séparateurs à liquide des installations de pulvérisation de peinture par obtention d'une boue de laque qui précipite.

**Claims**

1. A one-component formulation, containing an additive which envelops paint particles, for precipitating, detackifying and coagulating underseal based on waxes, wax-like plastics and plastics dispersions and also synthetic resin paints in wet paint mist separators of paint-spraying installations, to obtain a sedimenting paint sludge, characterized in that it contains, as the additive, an aqueous suspension of hydrated marble lime, and in that it is formed of

a) 0.1—0.5% of a blend containing cellulose and montmorillonite or smectite,
b) 1—2% of an aliphatic alcohol having 1—3 carbon atoms,
c) 1—10% of a fatty alcohol alkoxylate,
d) 0.1—0.8% of a naphthalenesulfonic acid condensation product and
e) 30—50% of hydrated marble lime,

each relative to the weight of the formulation, the remainder of the formulation consisting of water.

2. The use of the one-component formulation as claimed in claim 1 for precipitating, detackifying and coagulating underseal based on waxes, wax-like plastics and plastics dispersions and also synthetic resin paints in wet separators of paint-spraying installations, yielding a sedimenting paint sludge.